(19) Europäisches Patentamt
European Patent Office
Office européen des brevets

(11) **EP 3 873 709 B1**

(12) **EUROPEAN PATENT SPECIFICATION**

(45) Date of publication and mention
of the grant of the patent:
**06.09.2023 Bulletin 2023/36**

(21) Application number: **19809193.6**

(22) Date of filing: **25.10.2019**

(51) International Patent Classification (IPC):
*B27G 13/00* *(2006.01)*    *B27G 13/02* *(2006.01)*
*B27G 13/04* *(2006.01)*    *B27G 13/10* *(2006.01)*

(52) Cooperative Patent Classification (CPC):
**B27G 13/02; B23C 5/04; B23C 5/2213;**
**B27G 13/005; B27G 13/04; B27G 13/10**

(86) International application number:
**PCT/IT2019/050226**

(87) International publication number:
**WO 2020/089952 (07.05.2020 Gazette 2020/19)**

(54) **KIT FOR MILLING SEMI-WORKED PIECES AND METHOD**

FRÄS-KIT FÜR HALBFERTIGPRODUKTE UND METHODE

KIT DE FRAISAGE DE PIECES SEMIE-FINIES ET MÉTHODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018  IT 201800009896**

(43) Date of publication of application:
**08.09.2021  Bulletin 2021/36**

(73) Proprietor: **Metal World SpA**
**33050 Pavia di Udine (IT)**

(72) Inventor: **PAVIOTTI, Franco**
**33050 TRIVIGNANO UDINESE (IT)**

(74) Representative: **Petraz, Gilberto Luigi et al**
**GLP S.r.l.**
**Viale Europa Unita, 171**
**33100 Udine (IT)**

(56) References cited:
**EP-A1- 0 005 906        WO-A1-2008/119092**
**IT-A1- BO20 110 118     IT-A1- PS20 100 006**
**US-A- 3 986 543**

**Description**

FIELD OF THE INVENTION

The present invention concerns a kit for milling semi-finished pieces made of woody material according to the preamble of claim 1, and a method for milling semi-finished pieces according to the preamble of claim 5. Such a kit for milling and such a method for milling are known from the document EP0005906A1.

By way of example only, the kit as above and the corresponding milling method can be used both for trimming and also for edging semi-finished pieces made of woody material provided with melamine, laminated, embellished or veneered or pre-painted edges, and also to obtain continuous and flat surfaces.

The present invention also concern the corresponding method to produce the milling bodies, the cutting tools and their combination.

BACKGROUND OF THE INVENTION

In the industrial sector, and more particularly in those sectors where materials such as wood, metal and not only are worked, it is known to perform milling operations.

By way of example, these workings are used to make a surface regular in order to prepare it for subsequent operations such as varnishing, gluing or other.

For these operations to be successful, even very precise and defined surface tolerances and finishes are often required.

For this purpose, milling tools or milling cutters are known comprising a milling body or body, substantially cylindrical in shape, on which a plurality of cutting inserts, called knives, is radially associated.

The cutting inserts are positioned inside housing seatings, made in the body itself and which can be inclined with a seating angle with respect to the axis of rotation of the milling cutter.

Often the cutting inserts are stably applied in the corresponding housing seatings with a mechanical attachment, for example with a screw-type clamping mechanism or with other reversible connection means.

This mechanical attachment allows the removal of the inserts from the body, for example, for sharpening operations or for their replacement, in case of excessive wear or damage or due to geometric variations of the insert.

In order to obtain flat surfaces, the cutting inserts are provided with a cutting edge, with a flat profile, made in a single body with the insert, that is, attached thereto for example by braze welding.

At other times the cutting edge is obtained by applying plates made of very hard material to the milling body.

In the case of milling operations, it is advantageous for the inserts to be positioned inclined with respect to the axis of rotation of the milling cutter to reduce the cutting effort.

In the case of milling of flat surfaces, current technology does not allow to make inserts in order to make flat or substantially flat surfaces.

The standardized replaceable inserts used until now have a cutting edge with an arcuate profile.

This profile, however, means that the surface obtained is not flat, but has easily identifiable continuous depressions.

In particular, with the known technique, in order to obtain flat or substantially flat surfaces it is necessary that for each diameter of the body, the inserts have a specific cutting profile of the cutting edge.

It is therefore evident that the geometry of the cutting edge requires a specific design that takes into account the angle of installation of the inserts on the body and the diameter of the latter.

Consequently, the problem arises of storing a large variety of different inserts and of their correct installation on bodies having specific diameters. It can also happen that different inserts are confused, given the minimal differences that characterize them.

There is therefore the need to perfect cutting inserts, to obtain desired flat surfaces, so that a single type of insert is valid for the entire range of diameters of the milling body.

Therefore, one purpose of the present invention is to provide a kit for milling semi-finished pieces and a corresponding milling method which allow to reduce the stock inventory of the inserts, facilitating their supply.

Another purpose is to simplify the construction of the milling bodies.

Another purpose of the present invention is to provide a kit for milling semi-finished pieces and a corresponding milling method which allow to simplify the assembly and disassembly operations of the components of a milling cutter. Moreover, the invention allows to avoid installation errors of the components as above on milling bodies with different sizes from each other, at the same time obtaining the desired results in the milling operations of flat surfaces.

Another purpose of the present invention is to provide a milling kit which allows to obtain flat and continuous surfaces using the same inserts, or inserts having the same geometry as the diameter of the milling body varies.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the invention or variants to the main inventive idea.

Embodiments described here concern a kit for milling semi-finished pieces comprising a first milling body having a first diameter, provided with at least first housing seatings to receive respective inserts having a cutting edge according to the invention.

According to the present invention, the first housing seatings are configured to position the cutting edges of the inserts inclined by a first angle with respect to an axis of rotation of the first milling body.

The milling kit also comprises a second milling body having a second diameter, provided with at least second housing seatings.

In accordance with one aspect of the present invention, the second housing seatings have the same conformation as the first housing seatings.

The same inserts installed in the first housing seatings are installed in the second housing seatings, or other inserts with the same geometry as that of the inserts installed in the latter.

In this way, it is possible to always install the same type of inserts, or inserts having all the same geometry, on milling cutters with different sizes.

This greatly reduces the cost of producing and supplying, as well as storing the inserts.

Furthermore, this reduces production and management complexities for the manufacturer of milling cutters and/or inserts, and simplifies the management of orders and replacement of components for the end user.

Furthermore, the milling kit, as described above, prevents the possible installation of incorrect inserts for a predefined milling body.

Furthermore, the kit according to the invention, allows the execution of milling workings of flat and regular surfaces, as the diameter of the milling body varies.

One advantage of the milling kit according to the present invention is that it is standardized and simple to make, therefore it can be produced on a large scale.

Another advantage of the milling kit according to the present invention is that it allows to use the same inserts or inserts with the same geometry in milling bodies having different diameters.

Embodiments of the present invention also concern a method for milling semi-finished pieces with the milling kit as above.

These and other aspects, characteristics and advantages of the present disclosure will be better understood with reference to the following description, drawings and attached claims. The drawings show some embodiments of the present invention and describe the principles of the disclosure.

BRIEF DESCRIPTION OF THE DRAWINGS

These and other characteristics of the present invention will become apparent from the following description of some embodiments, given as a non-restrictive example with reference to the attached drawings wherein:

- fig. 1 is a three-dimensional view of a milling cutter belonging to the milling kit, in accordance with the present invention;
- fig. 2 schematically shows a milling kit consisting of milling cutters with different diameters, and provided with an insert having the same geometry;
- figs. 3-5 show a possible development on a plane of the kit of milling cutters of fig. 2;
- fig. 6 shows a view from above of a component of fig. 1;
- figs. 7-9 show another possible development on a plane of the kit of milling cutters of fig. 2.

To facilitate comprehension, the same reference numbers have been used, where possible, to identify identical common elements in the drawings. It is understood that elements and characteristics of one embodiment can conveniently be incorporated into other embodiments without further clarifications.

DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

Embodiments described using the attached drawings concern a kit for milling semi-finished pieces indicated as a whole with reference number 10 in the attached drawings, and the corresponding milling method.

In particular, the present milling kit 10 and corresponding method can be used to make or finish semi-finished pieces made of wood and its derivatives.

The milling kit 10 comprises at least two milling cutters.

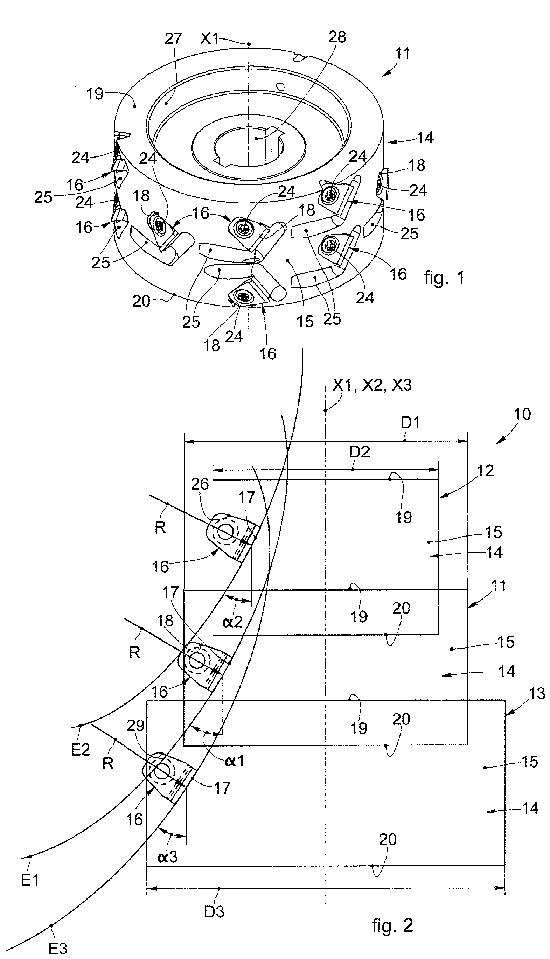

In accordance with some embodiments, shown for example in fig. 2, figs. 3-5 and figs. 7-9, the milling kit 10 comprises a first milling cutter 11, a second milling cutter 12 and a third milling cutter 13 having respectively a first diameter D1, a second diameter D2 and a third diameter D3 different from each other.

In general terms, the milling kit 10 can comprise a number of milling cutters greater than or equal to two having diameters suitable to work specific semi-finished pieces.

The milling kit 10 comprises a first milling cutter 11, shown in fig. 1, having a first diameter D1 and provided with at least first housing seatings 18. The first housing seatings 18 are configured to receive respective inserts 16 having a cutting edge 17 with an arcuate profile.

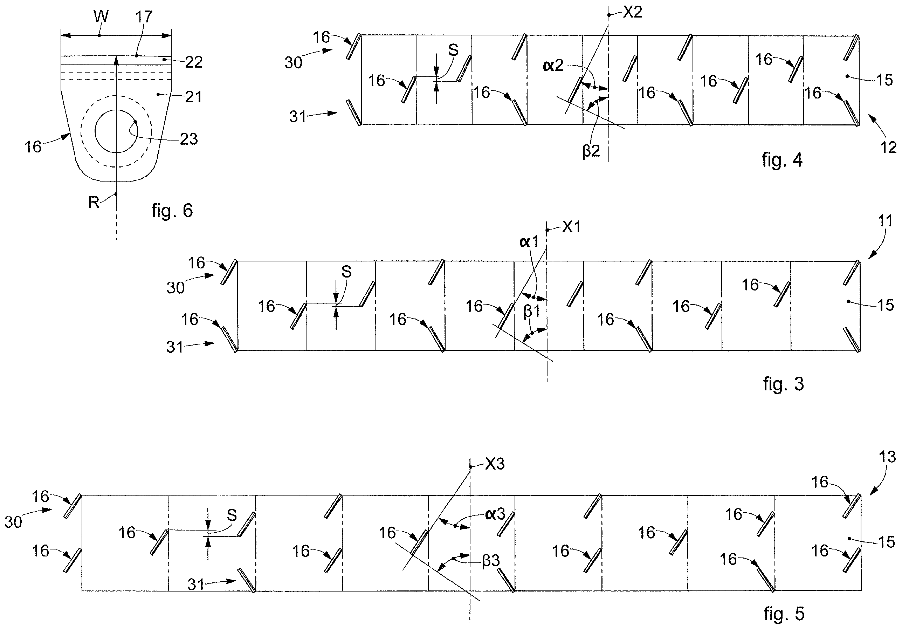

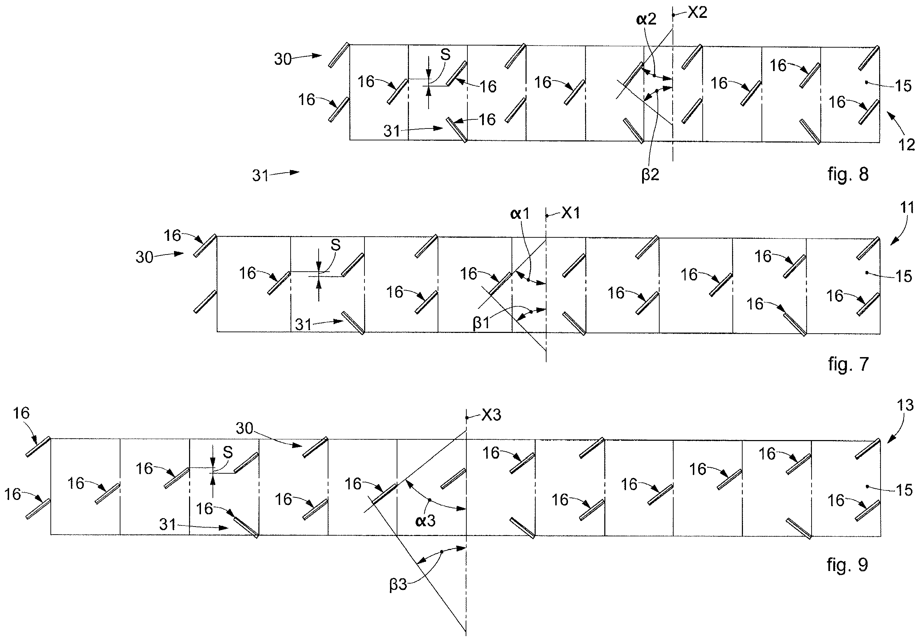

As shown, for example, in figs. 3 and 7, the first housing seatings 18 are further configured to position the cutting edges 17 of the inserts 16 inclined by a first angle $\alpha 1$ with respect to a first axis of rotation X1 of the first milling cutter 11.

Specifically, the first angle $\alpha 1$ is determined as the reciprocal angle between the first axis of rotation X1 of the first milling cutter 11 and the oblong development of the cutting edge 17, that is, of the chord subtended to the arcuate profile of the cutting edge 17.

The first milling cutter 11 is provided with a body 14, substantially cylindrical in shape and symmetrical with respect to the first axis of rotation X1.

The body 14 is delimited laterally by a peripheral surface 15 and in the direction of the first axis of rotation X1 by base surfaces 19, 20.

The first housing seatings 18 are made in the peripheral surface 15, which have a shape mating with that of the inserts 16, to house the latter.

According to the invention, the first housing seatings 18 are inclined by first seating angles $\beta 1$. The first seating angles $\beta 1$ are inclined in a complementary manner with the first angle $\alpha 1$ with respect to the first axis of rotation X1, as shown in figs. 3 and 7.

In accordance with the embodiment shown in fig. 1, the first housing seatings 18 are hollowed in a radial direction in the body 14. In particular, the first housing seatings 18 are hollowed to a depth such as to contain the inserts 16, but to position at least the cutting edges 17 radially cantilevered with respect to the peripheral surface 15, to allow the working of the semi-finished piece.

The first angles $\alpha 1$ and the first seating angles $\beta 1$ of the cutting edges 17 and of the first housing seatings 18 respectively, have an amplitude suitable to allow a correct working and surface finish of the semi-finished piece.

In accordance with possible solutions of the present invention, the first milling cutter 11, and by analogy possibly also the second milling cutter 12 and the third milling cutter 13, can comprise a first array 30 of inserts 16 installed in a first circumferential portion located in the proximity of the base surface 19.

The first milling cutter 11, and by analogy possibly also the second milling cutter 12 and the third milling cutter 13, can also comprise at least one second array 31 of inserts 16 installed in a second circumferential portion located in the proximity of the base surface 20, opposite the base surface 19.

The inserts 16 of the first array 30 are located, with the orientation of their cutting edges 17, in a specular manner with respect to the inserts 16 of the second array 31.

Between the first array 30 of inserts 16 and the second array 31 of inserts 16, other arrays of inserts 16 can also be interposed, located according to the orientation of either the first array 30 or the second array 31.

This particular disposition of the inserts 16 of the first array 30 with respect to those of the second array 31 allows, during the working of the semi-finished piece, to not damage the edges that delimit the surface of the semi-finished piece being worked. In fact, in this case the waste material removed is thrust toward the inside of the surface preventing its edges from being chipped. This is particularly effective for specific applications, such as the edging of chipboard wood or MDF panels.

The body 14 has a height, that is, a distance between the base surfaces 19, 20 which essentially depends on the sizes of the surface of the semi-finished piece.

During a milling operation, the edges of the surface of the semi-finished piece are positioned in correspondence with the inserts 16 adjoining the base surfaces 19, 20, that is, respectively in correspondence with the first array 30 and the second array 31.

The number of inserts 16 disposed along the height of the first milling cutter 11 depends on the sizes of the surface of the semi-finished piece and on the first angle α1. In fact, if the surface of the semi-finished piece increases, the number of inserts 16 along the height of the first milling cutter 11 increases; if the first angle α1 increases, the number of inserts 16 along the height of the first milling cutter 11 increases, in order to work the same surface.

In accordance with some embodiments, shown in figs. 3-5 and figs. 7-9, the inserts 16 are disposed along the body 14 so that the ends of the cutting edges 17 are slightly overlapping each other in a circumferential direction by a measure S, for example variable between about 1mm and about 2mm, preferably about 1.5mm.

Moreover, the particular disposition of the inserts 16 combined with the rotation of the first milling cutter 11 with respect to the first axis of rotation X1 allows, during the milling operation, the passage of all the points making up the cutting profile of the cutting edges 17 along a same cutting plane perpendicular to the base surfaces 19, 20 of the first milling cutter 11. In this way, it is possible to guarantee a continuous working of the surface, since the cutting profiles of the cutting edges 17 cover, on the whole, the entire surface of the semi-finished piece.

In accordance with the embodiment shown in fig. 1, concavities 27 and a through coupling hole 28 can be made on the base surfaces 19, 20, located orthogonally to the base surfaces 19, 20.

The concavities 27 and the coupling hole 28 allow the insertion of a rotation shaft of a milling machine intended to use the first milling cutter 11.

Moreover, discharge channels 25 can be made in the peripheral surface 15, hollowed in the body 14 and configured to move the waste material away from the cutting zone. The waste material, for example, can consist of chips and resin.

The discharge channels 25 are each made in correspondence with the first housing seatings 18, or at least in correspondence with the cutting edges 17 of the inserts 16.

In accordance with the embodiment shown in fig. 6, the inserts 16 can comprise a support base 21 provided with a seating suitable to house a cutting element 22. The cutting element 22 can have a prismatic shape and is provided with the cutting edge 17 with an arcuate cutting profile and width W.

In accordance with some embodiments, the cutting profiles of the cutting edges 17 of the inserts 16 have a radius of curvature R which is the same for each milling cutter 11, 12, 13 of the milling kit 10 used.

The cutting profile of the cutting edge 17 is also curved at its ends with a radius of curvature equal to about 2mm, in order to prevent the ends of the cutting edge 17, more fragile, from being damaged during the milling operation. In this sense, the overlapping of the ends of the cutting edges 17 in the circumferential direction allows to compensate for the reduced cutting capacity that the cutting edges 17 have in the proximity of their curved ends.

The support base 21 also comprises a hole 23 to allow its attachment, for example with mechanical attachment means 24, to the body 14. Typically, these mechanical attachment means 24 are reversible in order to allow the removal of the inserts 16 for their replacement or maintenance, for example to sharpen their cutting edges 17.

In some embodiments, the mechanical attachment means 24 can comprise screws or bayonet-type mechanisms.

It should be noted that the detailed description of the first milling cutter 11 and of the details that characterize it can refer, by extension, to any milling cutter whatsoever comprised in the milling kit 10 in accordance with the present invention, and the ordinal phraseology and terminology used to identify the milling cutters and some of their details can be obtained automatically by extension.

The milling kit 10 also comprises at least one second milling cutter 12 having a second diameter D2 different from the first diameter D1 of the first milling cutter 11. The second milling cutter 12 is provided with second housing seatings 26 for housing the inserts 16.

In accordance with one aspect of the present invention, the second housing seatings 26 are configured to position the cutting edges 17 of the inserts 16 inclined by a second angle α2 with respect to a second axis of rotation X2 of the second milling cutter 12, the second angle α2 being different from the first angle α1.

The same inserts 16 installed in the first housing seatings 18 are installed in the second housing seatings 26, or other inserts 16 with the same geometry as that of the inserts 16 installed in the latter.

The second housing seatings 26 have the same conformation as the first housing seatings 18.

In this way, it is possible to install identical inserts 16 or inserts 16 having the same geometry on the first milling cutter 11 and the second milling cutter 12 having different first diameter D1 and second diameter D2, simply making first housing seatings 18 and second housing seatings 26 with similar geometry, but with inclination of the first seating angles β1 and of the second seating angles β2 different from each other.

In accordance with a possible solution of the present invention, and as will be better explained in the following description, the first angle α1 and/or the second angle α2 of inclination of the cutting edge 17 is determined by means of the formula, or a formula equivalent to:

$$\alpha = arcsin\left\{\frac{D}{2}\left[\frac{W^2}{4}\left(1-\frac{\left(R-\sqrt{R^2-\frac{W^2}{4}}-\frac{D}{2}\right)^2}{\frac{D^2}{4}}\right)^{-1}\right]^{-0.5}\right\}$$

where:

D: is the diameter of the first milling cutter 11 and/or respectively of the second milling cutter 12;
R: is the radius of curvature of the cutting edge 17 of the insert 16;
W: is the width of the cutting edge 17.

Evidently, due to what stated above, the considerations just given for the second milling cutter 12 also apply, by extension, to a third milling cutter 13, represented for example in figs. 2, 5 and 9.

Embodiments of the present invention also concern a method for milling semi-finished pieces which comprises supplying the first milling cutter 11 having the first diameter D1 and provided with the first housing seatings 18 to receive the inserts 16 in each of them.

The first housing seatings 18 are configured to position the cutting edges 17 of the inserts 16 inclined by the first angle $\alpha 1$ with respect to the first axis of rotation X1 of the first milling cutter 11.

The method also provides to supply the second milling cutter 12 having the second diameter D2 provided with the second housing seatings 26.

In accordance with one aspect of the present invention, the second housing seatings 26 are configured to position the cutting edges 17 of the inserts 16 inclined by a second angle $\alpha 2$ with respect to the second axis of rotation X2 of the second milling cutter 12, the second angle $\alpha 2$ being different from the first angle $\alpha 1$.

The method provides to install the same inserts 16 installed in the first housing seatings 18 in the second housing seatings 26, or other inserts 16 with the same geometry as that of the inserts 16 installed in the latter. The second housing seatings 26 have the same conformation as the first housing seatings 18.

In accordance with possible solutions, in the event the second diameter D2 is smaller than the first diameter D1, the second angle $\alpha 2$ is also smaller than the first angle $\alpha 1$. This correlation allows to obtain the above mentioned advantages of the present invention.

In accordance with a first embodiment of the invention, the method can provide to set the first angle of inclination $\alpha 1$ of the cutting edge 17, the width W of the cutting edge 17 and the first diameter D1 of the first milling cutter 11.

These parameters can be set directly by the manufacturer of the milling kit 10, according to the present invention, on the basis of his/her own production experiences, based on fields of use and/or materials to be worked, and/or on the basis of suitable sizing, one of which is for example identified below.

By way of example only, it can be provided to set the first angle of inclination $\alpha 1$ of the cutting edge 17 at a value comprised between 15° and 80°, preferably between 20° and 70°.

According to another embodiment of the invention, the width W of the cutting edge 17 is comprised between 6mm and 30mm, preferably between 8mm and 25mm.

The method in accordance with the present invention comprises the determination of the radius of curvature R of the cutting edge 17 by means of a first formula, or an equivalent formula, that is, which leads to the same result:

$$R = \frac{1}{2}\left\{-\left[\frac{D1^2}{4}\left(1-\frac{W^2}{D1^2}\sin^2\alpha 1\right)\right]^{0.5}+\frac{D1}{2}+\frac{W^2}{4}\left[-\left[\frac{D1^2}{4}\left(1-\frac{W^2}{D1^2}\sin^2\alpha 1\right)\right]^{0.5}+\frac{D1}{2}\right]^{-1}\right\}$$

This formula is determined on the basis of the geometry of the body 14 and of the inclined disposition of the inserts 16.

In particular, by sectioning the first milling cutter 11 according to a plane inclined by the first angle $\alpha 1$, a first ellipse E1 is defined, partly shown in fig. 2.

The first ellipse E1 has a minor axis equal respectively to the first diameter D1 of the first milling cutter 11 and a major axis equal to the first diameter D1 divided by the sine of the first angle $\alpha 1$ set.

The midpoint of the cutting edge 17 of the insert 16 is positioned in correspondence with the intersection of the first ellipse E1 with its minor axis.

The portion of the first ellipse E1 overlapping the cutting edge 17, which has its width W, can be assimilated to a circumference arc having a radius of curvature which corresponds to the radius of curvature R as above.

On the basis of these geometric considerations and of the characteristic equations of an ellipse and of a circumference arc, it is possible to determine the above formula, or an equivalent formula.

In accordance with a second embodiment of the invention, alternative to the first embodiment as above, the method can provide to set, for example in an arbitrary manner, the radius of curvature R of the cutting edge 17, the width W of the cutting edge 17 and the first diameter D1 of the first milling cutter 11.

The method according to the present invention comprises the determination of the first angle of inclination $\alpha1$ of the cutting edge 17 by means of the second formula or an equivalent formula, that is, that leads to the same result:

$$\alpha1 = arcsin\left\{\frac{D1}{2}\left[\frac{W^2}{4}\left(1 - \frac{\left(R - \sqrt{R^2 - \frac{W^2}{4}} - \frac{D1}{2}\right)^2}{\frac{D1^2}{4}}\right)^{-1}\right]^{-0.5}\right\}$$

This formula is also determined on the basis of the geometrical considerations described above for the first embodiment.

In this way, it is possible to obtain the complete sizing of the first milling cutter 11 since all of its construction parameters for making the housing seatings 18 for the inserts 16 have been identified, as well as the geometry of the latter. The first milling cutter 11 can therefore be used as a reference milling cutter for the subsequent sizing of the other milling cutters of the milling kit 10.

According to possible implementations of the method according to the present invention, the setting of the second diameter D2 of the second milling cutter 12 is provided on the basis of the application needs required. The setting of the second diameter D2 can be completely arbitrary.

Subsequently, on the basis of this second diameter D2 and of the geometric parameters of the insert 16 defined above, the second angle $\alpha2$ for positioning the insert 16 on the second milling cutter 12 is determined.

This second angle $\alpha2$ is determined with a formula substantially analogous to the second formula above, that is:

$$\alpha2 = arcsin\left\{\frac{D2}{2}\left[\frac{W^2}{4}\left(1 - \frac{\left(R - \sqrt{R^2 - \frac{W^2}{4}} - \frac{D2}{2}\right)^2}{\frac{D2^2}{4}}\right)^{-1}\right]^{-0.5}\right\}$$

In fact, the same geometrical considerations defined above for the first milling cutter 11 also apply to the second milling cutter 12.

In particular, the cutting edge 17 of the insert 16 is suitably inclined by a second angle $\alpha2$ so that the cutting edge 17 overlaps a portion of a second ellipse E2 obtained by sectioning the second milling cutter 12 according to a plane inclined by the second angle $\alpha2$. This portion of the second ellipse E2 also has a curvature comparable to a circle arc having the radius of curvature R of the cutting edge 17.

Similar considerations can be made for any milling diameter whatsoever of the milling kit 10 according to the present invention.

For example, also for a third milling cutter 13, having a third diameter D3, it is possible to determine a third angle of disposition $\alpha3$ of the cutting edge 17, so that the latter overlaps a portion of a third ellipse E3 obtained by sectioning the third milling cutter 13 according to a plane inclined by the third angle $\alpha3$.

In the following description, by way of a non-limiting example only, two examples are described for determining the first, second and third angles $\alpha1$, $\alpha2$ and $\alpha3$ for respective first, second and third milling cutters 11, 12, 13 of the milling kit 10.

Example 1

The following are set:

-   the first diameter D1 of the first milling cutter 11: 100mm;

- the first angle of disposition α1 of the cutting edge 17: 30°;
- the width W of the cutting edge 17: 14mm.

From these set values it is possible to determine the radius of curvature R of the cutting edge 17 of the insert 16 with the first formula reported above, obtaining a radius of curvature R equal to about 199.82 mm.

This allows to completely define the geometry of the cutting edge 17.

The seating angle β1 of the first housing seatings 18 of the inserts 16 is equal to 60°.

Subsequently, it is provided to determine the angle of disposition of the cutting edges 17 on a second milling cutter 12 and a third milling cutter 13 having respectively a second diameter D2 of 80mm and a third diameter D3 of 125mm. These diameter values are set by the milling cutter manufacturer.

On the basis of these values it is possible to determine the second angle α2 equal to 26.56° and the third angle of disposition α3 equal to 33.99° of the same inserts 16 defined above for the first milling cutter 11.

The seating angles β2 and β3 respectively of the second housing seatings 26 and of the third housing seatings 29 of the inserts 16 are therefore respectively equal to 63.44° and 50.01°.

Example 2

The following are set:

- the first diameter D1 of the first milling cutter 11: 100mm;
- the first angle of disposition α1 of the cutting edge 17: 45°;
- the width W of the cutting edge 17: 14mm.

From these set values it is possible to determine the radius of curvature R of the cutting edge 17 of the insert 16 with the first formula reported above, obtaining a radius of curvature R equal to about 99.88 mm.

This allows to completely define the geometry of the cutting edge 17. The seating angle β1 of the first housing seatings 18 of the inserts 16 is therefore equal to 45°.

Subsequently, the angle of disposition of the cutting edges 17 on a second milling cutter 12 and a third milling cutter 13 having respectively a second diameter D2 of 80mm and a third diameter D3 of 125mm is determined. These diameter values are set by the milling cutter manufacturer.

On the basis of these values it is possible to determine the second angle α2 equal to 39.21° and the third angle of disposition α3 equal to 52.26° of the same inserts 16 defined above for the first milling cutter 11.

The seating angles β2 and β3 respectively of the second housing seatings 26 and of the third housing seatings 29 of the inserts 16 are therefore respectively equal to 50.79° and 37.74°.

It is clear that modifications and/or additions of parts may be made to the method for milling semi-finished pieces and corresponding milling kit as described heretofore, without departing from the field and scope of the present invention.

It is also clear that, although the present invention has been described with reference to some specific examples, a person of skill in the art shall certainly be able to achieve many other equivalent forms of kit for milling semi-finished pieces and corresponding method, having the characteristics as set forth in the claims and hence all coming within the field of protection defined thereby.

**Claims**

1. Kit for milling semi-worked pieces comprising a first milling cutter (11) having a first diameter (D1) and provided with at least first housing seatings (18) to receive respective inserts (16) having a cutting edge (17) with an arcuate profile, said first housing seatings (18) being configured to position said cutting edges (17) of the inserts (16) inclined by a first angle (α1) with respect to a first axis of rotation (X1) of the first milling cutter (11), and a second milling cutter (12) having a second diameter (D2) different from the first diameter (D1) and provided with second housing seatings (26), **characterized in that** said second housing seatings (26) are configured to position said cutting edges (17) of said inserts (16) inclined by a second angle (α2) with respect to a second axis of rotation (X2) of said second milling cutter (12), said second angle (α2) being different from said first angle (α1), **and in that** said second housing seatings (26) have the same conformation as said first housing seatings (18), and the same inserts (16) installed in said first housing seatings (18) are installed in said second housing seatings (26), or other inserts (16) with the same geometry as that of the inserts (16) installed in the latter, wherein said first housing seatings (18) and said second housing seatings (26) have a shape mating with that of said inserts (16) and are inclined, with respect to said first axis of rotation (X1) and second axis of rotation (X2), by first seating angles (β1) and respectively second

seating angles ($\beta2$) that are complementary respectively to said first angles ($\alpha1$) and second angles ($\alpha2$).

2. Milling kit as in claim 1, **characterized in that** said first angle ($\alpha1$) and/or said second angle ($\alpha2$) of inclination of the cutting edge (17) is determined by means of the following formula:

$$\alpha = arcsin\left\{\frac{D}{2}\left[\frac{W^2}{4}\left(1 - \frac{\left(R - \sqrt{R^2 - \frac{W^2}{4}} - \frac{D}{2}\right)^2}{\frac{D^2}{4}}\right)^{-1}\right]^{-0.5}\right\}$$

where:

D: is the diameter of the first milling cutter (11) and/or respectively of the second milling cutter (12);
R: is the radius of curvature of the cutting edge (17) of the insert (16);
W: is the width of the cutting edge (17).

3. Milling kit as in any claim hereinbefore, **characterized in that** said inserts (16) are positioned in said first milling cutter (11) and second milling cutter (12) in such a way that the ends of said cutting edges (17) overlap each other in a circumferential direction, by a measurement (S) variable between about 1mm and about 2mm, preferably about 1.5mm.

4. Milling kit as in any claim hereinbefore, **characterized in that** said first angle ($\alpha1$) of inclination of said cutting edge (17) has a value comprised between 15° and 80°, preferably between 20° and 70°.

5. Method for milling semi-finished pieces comprising the provision of a first milling cutter (11) having a first diameter (D1) and provided with at least first housing seatings (18) to receive respective inserts (16) having a cutting edge (17) with an arcuate profile, said first housing seatings (18) being configured to position said cutting edges (17) of the inserts (16) inclined by a first angle ($\alpha1$) with respect to a first axis of rotation (X1) of the first milling cutter (11), and the provision of a second milling cutter (12) having a second diameter (D2) provided with second housing seatings (26), **characterized in that** said second housing seatings (26) are configured to position said cutting edges (17) of said inserts (16) inclined by a second angle ($\alpha2$) with respect to a second axis of rotation (X2) of said second milling cutter (12), said second angle ($\alpha2$) being different from said first angle ($\alpha1$), **and in that** it provides to install in said second housing seatings (26) the same inserts (16) installed in said first housing seatings (18) or other inserts (16) with a geometry equal to that of the inserts (16) installed in the latter, said second housing seatings (26) having the same conformation as said first housing seatings (18), wherein said first housing seatings (18) and said second housing seatings (26) have a shape mating with that of said inserts (16) and are inclined, with respect to said first axis of rotation (X1) and second axis of rotation (X2), by first seating angles ($\beta1$) and respectively second seating angles ($\beta2$) in a manner complementary respectively to said first angles ($\alpha1$) and second angles ($\alpha2$).

6. Method as in claim 5, **characterized in that** said second diameter (D2) is smaller than said first diameter (D1) and said second angle ($\alpha2$) is smaller than said first angle ($\alpha1$).

7. Method as in claim 5, **characterized in that** it comprises setting the values:

D1: diameter of the first milling cutter (11);
W: width of the cutting edge (17);
$\alpha1$: first angle ($\alpha1$) of inclination of the inserts (16) with respect to the first axis of rotation (X1); and

determining a radius of curvature (R) of the cutting edge (17) by means of a first formula:

$$R = \frac{1}{2}\left\{-\left[\frac{D1^2}{4}\left(1 - \frac{W^2}{D1^2}\sin^2\alpha1\right)\right]^{0.5} + \frac{D1}{2} + \frac{W^2}{4}\left[-\left[\frac{D1^2}{4}\left(1 - \frac{W^2}{D1^2}\sin^2\alpha1\right)\right]^{0.5} + \frac{D1}{2}\right]^{-1}\right\}$$

8. Method as in claim 5, **characterized in that** it comprises setting the values:

> D1: diameter of the first milling cutter (11);
> R: radius of curvature of the cutting edge (17) of the insert (16);
> W: width of the cutting edge (17); and

determining said first angle ($\alpha$1) of inclination of the cutting edge (17) by means of a second formula:

$$\alpha 1 = arcsin \left\{ \frac{D1}{2} \left[ \frac{W^2}{4} \left( 1 - \frac{\left( R - \sqrt{R^2 - \frac{W^2}{4}} - \frac{D1}{2} \right)^2}{\frac{D1^2}{4}} \right)^{-1} \right]^{-0,5} \right\}$$

9. Method as in any claim from 5 to 8, **characterized in that** it comprises determining said second angle ($\alpha$2) of inclination of the cutting edge (17) by means of the formula:

$$\alpha 2 = arcsin \left\{ \frac{D2}{2} \left[ \frac{W^2}{4} \left( 1 - \frac{\left( R - \sqrt{R^2 - \frac{W^2}{4}} - \frac{D2}{2} \right)^2}{\frac{D2^2}{4}} \right)^{-1} \right]^{-0,5} \right\}$$

where:

> D2: is the diameter of the second milling cutter (12);
> R: is the radius of curvature of the cutting edge (17) of the insert (16);
> W: is the width of the cutting edge (17).

**Patentansprüche**

1. Satz zum Fräsen von halbbearbeiteten Werkstücken, aufweisend ein erstes Fräswerkzeug (11), welches einen ersten Durchmesser (D1) aufweist und mit mindestens ersten Gehäusesitzen (18) versehen ist, um jeweilige Einsätze (16), die eine Schneidkante (17) mit einem gebogenen Profil aufweisen, aufzunehmen, wobei die ersten Gehäusesitze (18) dazu eingerichtet sind, die Schneidkanten (17) der Einsätze (16) um einen ersten Winkel ($\alpha$1) bezogen auf eine erste Drehachse (X1) des ersten Fräswerkzeugs (11) geneigt zu positionieren, und ein zweites Fräswerkzeug (12), welches einen zweiten Durchmesser (D2), der sich von dem ersten Durchmesser (D1) unterscheidet, aufweist und mit zweiten Gehäusesitzen (26) versehen ist, **dadurch gekennzeichnet, dass** die zweiten Gehäusesitze (26) dazu eingerichtet sind, die Schneidkanten (17) der Einsätze (16) um einen zweiten Winkel ($\alpha$2) bezogen auf eine zweite Drehachse (X2) des zweiten Fräswerkzeugs (12) geneigt zu positionieren, wobei der zweite Winkel ($\alpha$2) sich von dem ersten Winkel ($\alpha$1) unterscheidet, **und dass** die zweiten Gehäusesitze (26) die gleiche Gestalt wie die ersten Gehäusesitze (18) haben und die gleichen Einsätze (16), die in den ersten Gehäusesitzen (18) installiert sind, in den zweiten Gehäusesitzen (26) installiert sind oder andere Einsätze (16) mit der gleichen Geometrie wie die der Einsätze (16), die in letzteren installiert sind, wobei die ersten Gehäusesitze (18) und die zweiten Gehäusesitze (26) eine Gestalt, die mit der der Einsätze (16) zusammenpasst, haben und bezogen auf die erste Drehachse (X1) und die zweite Drehachse (X2) jeweilig zugeordnet um erste Sitzwinkel ($\beta$1) und zweite Sitzwinkel ($\beta$2), die jeweils komplementär zu den ersten Winkeln ($\alpha$1) und zweiten Winkeln ($\alpha$2) sind, geneigt sind.

2. Frässatz nach Anspruch 1, **dadurch gekennzeichnet, dass** der erste Winkel ($\alpha$1) und/oder der zweite Winkel ($\alpha$2) der Neigung der Schneidkante (17) mittels der folgenden Formel ermittelt wird:

$$\alpha = arcsin\left\{ \frac{D}{2}\left[ \frac{W^2}{4}\left( 1 - \frac{\left( R - \sqrt{R^2 - \frac{W^2}{4}} - \frac{D}{2} \right)^2}{\frac{D^2}{4}} \right) \right]^{-1} \right\}^{-0,5}$$

wobei:

D: der Durchmesser des ersten Fräswerkzeugs (11) und/oder jeweilig des zweiten Fräswerkzeugs (12) ist,
R: der Krümmungsradius der Schneidkante (17) des Einsatzes (16) ist,
W: die Breite der Schneidkante (17) ist.

3. Frässatz nach einem der vorhergehenden Ansprüche, **dadurch gekennzeichnet, dass** die Einsätze (16) in dem ersten Fräswerkzeug (11) und dem zweiten Fräswerkzeug (12) so positioniert sind, dass die Enden der Schneidkanten (17) einander in einer Umfangsrichtung um ein Maß (S), das zwischen etwa 1 mm und etwa 2 mm, vorzugsweise etwa 1,5 mm, variabel ist, überlappen.

4. Frässatz nach einem der vorhergehenden Ansprüche, **dadurch gekennzeichnet, dass** der erste Winkel ($\alpha$1) der Neigung der Schneidkante (17) einen Wert zwischen 15° und 80°, vorzugsweise zwischen 20° und 70° hat.

5. Verfahren zum Fräsen von Halbzeugen, aufweisend das Bereitstellen eines ersten Fräswerkzeugs (11), welches einen ersten Durchmesser (D1) aufweist und mit mindestens ersten Gehäusesitzen (18) versehen ist, um jeweilige Einsätze (16), welche eine Schneidkante (17) mit einem gebogenen Profil aufweisen, aufzunehmen, wobei die ersten Gehäusesitze (18) dazu eingerichtet sind, die Schneidkanten (17) der Einsätze (16) um einen ersten Winkel ($\alpha$1) bezogen auf eine erste Drehachse (X1) des ersten Fräswerkzeugs (11) geneigt zu positionieren, und das Bereitstellen eines zweiten Fräswerkzeugs (12), welches einen zweiten Durchmesser (D2) aufweist und mit zweiten Gehäusesitzen (26) versehen ist, **dadurch gekennzeichnet, dass** die zweiten Gehäusesitze (26) dazu eingerichtet sind, die Schneidkanten (17) der Einsätze (16) um einen zweiten Winkel ($\alpha$2) bezogen auf eine zweite Drehachse (X2) des zweiten Fräswerkzeugs (12) geneigt zu positionieren, wobei sich der zweite Winkel ($\alpha$2) von dem ersten Winkel ($\alpha$1) unterscheidet, **und dass** es vorsieht, in den zweiten Gehäusesitzen (26) die gleichen Einsätze (16), welche in den ersten Gehäusesitzen (18) installiert sind, oder andere Einsätze (16) mit einer Geometrie, die gleich der der Einsätze (16) ist, die in den letzteren installiert sind, zu installieren, wobei die zweiten Gehäusesitze (26) die gleiche Gestalt wie die ersten Gehäusesitze (18) haben, wobei die ersten Gehäusesitze (18) und die zweiten Gehäusesitze (26) eine Gestalt, die mit der der Einsätze (16) zusammenpasst, haben und bezogen auf die erste Drehachse (X1) und die zweite Drehachse (X2) jeweilig um erste Sitzwinkel ($\beta$1) und zweite Sitzwinkel ($\beta$2) in einer jeweilig zu den ersten Winkeln ($\alpha$1) und den zweiten Winkeln ($\alpha$2) komplementären Weise geneigt sind.

6. Verfahren nach Anspruch 5, **dadurch gekennzeichnet, dass** der zweite Durchmesser (D2) kleiner ist als der erste Durchmesser (D1) und der zweite Winkel ($\alpha$2) kleiner ist als der erste Winkel ($\alpha$1).

7. Verfahren nach Anspruch 5, **dadurch gekennzeichnet, dass** es aufweist das Setzen der Werte:

D1: Durchmesser des ersten Fräswerkzeugs (11),
W: Breite der Schneidkante (17),
$\alpha$1: erster Winkel ($\alpha$1) der Neigung der Einsätze (16) bezogen auf die erste Drehachse (X1), und
Ermitteln eines Krümmungsradius (R) der Schneidkante (17) mittels einer ersten Formel:

$$R = \frac{1}{2}\left\{ -\left[ \frac{D1^2}{4}\left( 1 - \frac{W^2}{D1^2}\sin^2\alpha1 \right) \right]^{0,5} + \frac{D1}{2} + \frac{W^2}{4}\left[ -\left[ \frac{D1^2}{4}\left( 1 - \frac{W^2}{D1^2}\sin^2\alpha1 \right) \right]^{0,5} + \frac{D1}{2} \right]^{-1} \right\}.$$

8. Verfahren nach Anspruch 5, **dadurch gekennzeichnet, dass** es aufweist das Setzen der Werte:

D1: Durchmesser des ersten Fräswerkzeugs (11),
R: Krümmungsradius der Schneidkante (17) des Einsatzes (16),
W: Breite der Schneidkante (17), und
Ermitteln des ersten Winkels ($\alpha$1) der Neigung der Schneidkante (17) mittels einer zweiten Formel:

$$\alpha1 = arcsin\left\{\frac{D1}{2}\left[\frac{W^2}{4}\left(1 - \frac{\left(R - \sqrt{R^2 - \frac{W^2}{4}} - \frac{D1}{2}\right)^2}{\frac{D1^2}{4}}\right)^{-1}\right]^{-0.5}\right\}.$$

9. Verfahren nach einem der Ansprüche 5 bis 8, **dadurch gekennzeichnet, dass** es aufweist das Ermitteln des zweiten Winkels ($\alpha$2) der Neigung der Schneidkante (17) mittels der folgenden Formel:

$$\alpha2 = arcsin\left\{\frac{D2}{2}\left[\frac{W^2}{4}\left(1 - \frac{\left(R - \sqrt{R^2 - \frac{W^2}{4}} - \frac{D2}{2}\right)^2}{\frac{D2^2}{4}}\right)^{-1}\right]^{-0.5}\right\}$$

wobei:

D2: der Durchmesser des zweiten Fräswerkzeugs (12) ist,
R: der Krümmungsradius der Schneidkante (17) des Einsatzes (16) ist,
W: die Breite der Schneidkante (17) ist.


**Revendications**

1. Kit pour fraiser des pièces semi-usinées comprenant une première fraise (11) présentant un premier diamètre (D1) et pourvue au moins de premiers sièges de logement (18) pour recevoir des inserts respectifs (16) présentant un bord de coupe (17) avec un profil arqué, lesdits premiers sièges de logement (18) étant configurés pour positionner lesdits bords de coupe (17) des inserts (16) inclinés d'un premier angle ($\alpha$1) par rapport à un premier axe de rotation (X1) de la première fraise (11), et une seconde fraise (12) présentant un second diamètre (D2) différent du premier diamètre (D1) et pourvue de seconds sièges de logement (26), **caractérisé en ce que** lesdits seconds sièges de logement (26) sont configurés pour positionner lesdits bords de coupe (17) desdits inserts (16) inclinés d'un second angle ($\alpha$2) par rapport à un second axe de rotation (X2) de ladite seconde fraise (12), ledit second angle ($\alpha$2) étant différent dudit premier angle ($\alpha$1), et **en ce que** lesdits seconds sièges de logement (26) présentent la même conformation que lesdits premiers sièges de logement (18), et les mêmes inserts (16) installés dans lesdits premiers sièges de logement (18) sont installés dans lesdits seconds sièges de logement (26), ou d'autres inserts (16) avec la même géométrie que celle des inserts (16) installés dans ces derniers, dans lequel lesdits premiers sièges de logement (18) et lesdits seconds sièges de logement (26) présentent une forme correspondant à celle desdits inserts (16) et sont inclinés, par rapport audit premier axe de rotation (X1) et audit second axe de rotation (X2), par des premiers angles de siège ($\beta$1) et respectivement des seconds angles de siège ($\beta$2) qui sont complémentaires respectivement par rapport auxdits premiers angles ($\alpha$1) et seconds angles ($\alpha$2).

2. Kit de fraisage selon la revendication 1, **caractérisé en ce que** ledit premier angle ($\alpha$1) et/ou ledit second angle ($\alpha$2) d'inclinaison du bord de coupe (17) est/sont déterminé(s) au moyen de la formule suivante :

$$\alpha = arcsin\left\{\frac{D}{2}\left[\frac{W^2}{4}\left(1-\frac{\left(R-\sqrt{R^2-\frac{W^2}{4}}-\frac{D}{2}\right)^2}{\frac{D^2}{4}}\right)^{-1}\right]^{-0.5}\right\}$$

où :

D : est le diamètre de la première fraise (11) et/ou respectivement de la seconde fraise (12) ;
R : est le rayon de courbure du bord de coupe (17) de l'insert (16) ;
W : est la largeur du bord de coupe (17).

3. Kit de fraisage selon l'une quelconque des revendications précédentes, **caractérisé en ce que** lesdits inserts (16) sont positionnés dans ladite première fraise (11) et ladite seconde fraise (12) de manière à ce que les extrémités desdits bords de coupe (17) se chevauchent mutuellement dans une direction circonférentielle, par une mesure (S) variable entre environ 1 mm et environ 2 mm, de préférence d'environ 1,5 mm.

4. Kit de fraisage selon l'une quelconque des revendications précédentes, **caractérisé en ce que** ledit premier angle ($\alpha$1) d'inclinaison dudit bord de coupe (17) présente une valeur comprise entre 15° et 80°, de préférence entre 20° et 70°.

5. Procédé de fraisage de pièces semi-finies comprenant la fourniture d'une première fraise (11) présentant un premier diamètre (D1) et pourvue au moins de premiers sièges de logement (18) pour recevoir des inserts respectifs (16) présentant un bord de coupe (17) avec un profil arqué, lesdits premiers sièges de logement (18) étant configurés pour positionner lesdits bords de coupe (17) des inserts (16) inclinés d'un premier angle ($\alpha$1) par rapport à un premier axe de rotation (X1) de la première fraise (11), et la fourniture d'une seconde fraise (12) présentant un second diamètre (D2) pourvu de seconds sièges de logement (26), **caractérisé en ce que** lesdits seconds sièges de logement (26) sont configurés pour positionner lesdits bords de coupe (17) desdits inserts (16) inclinés d'un second angle ($\alpha$2) par rapport à un second axe de rotation (X2) de ladite seconde fraise (12), ledit second angle ($\alpha$2) étant différent dudit premier angle ($\alpha$1), et **en ce qu'**il prévoit d'installer dans lesdits seconds sièges de logement (26) les mêmes inserts (16) installés dans lesdits premiers sièges de logement (18) ou d'autres inserts (16) avec une géométrie égale à celle des inserts (16) installés dans ces derniers, lesdits seconds sièges de logement (26) présentant la même conformation que lesdits premiers sièges de logement (18), dans lequel lesdits premiers sièges de logement (18) et lesdits seconds sièges de logement (26) présentent une forme correspondant à celle desdits inserts (16) et sont inclinés, par rapport audit premier axe de rotation (X1) et audit second axe de rotation (X2), par des premiers angles de siège ($\beta$1) et respectivement des seconds angles de siège ($\beta$2) d'une manière complémentaire respectivement par rapport auxdits premiers angles ($\alpha$1) et seconds angles ($\alpha$2).

6. Procédé selon la revendication 5, **caractérisé en ce que** ledit second diamètre (D2) est inférieur audit premier diamètre (D1) et ledit second angle ($\alpha$2) est inférieur audit premier angle ($\alpha$1).

7. Procédé selon la revendication 5, **caractérisé en ce qu'**il comprend un réglage des valeurs :

D1 : diamètre de la première fraise (11) ;
W : largeur du bord de coupe (17) ;
$\alpha$1 : premier angle ($\alpha$1) d'inclinaison des inserts (16) par rapport au premier axe de rotation (X1) ; et
une détermination d'un rayon de courbure (R) du bord de coupe (17) au moyen d'une première formule :

$$R = \frac{1}{2}\left\{-\left[\frac{D1^2}{4}\left(1-\frac{W^2}{D1^2}\sin^2\alpha1\right)\right]^{0.5}+\frac{D1}{2}+\frac{W^2}{4}\left[-\left[\frac{D1^2}{4}\left(1-\frac{W^2}{D1^2}\sin^2\alpha1\right)\right]^{0.5}+\frac{D1}{2}\right]^{-1}\right\}$$

8. Procédé selon la revendication 5, **caractérisé en ce qu'**il comprend un réglage des valeurs :

D1 : diamètre de la première fraise (11) ;
R : rayon de courbure du bord de coupe (17) de l'insert (16) ;
W : largeur du bord de coupe (17) ; et

une détermination dudit premier angle ($\alpha$1) d'inclinaison du bord de coupe (17) au moyen d'une seconde formule :

$$\alpha = arcsin \left\{ \frac{D1}{2} \left[ \frac{W^2}{4} \left( 1 - \frac{\left( R - \sqrt{R^2 - \frac{W^2}{4}} - \frac{D1}{2} \right)^2}{\frac{D1^2}{4}} \right)^{-1} \right]^{-0.5} \right\}$$

9. Procédé selon l'une quelconque des revendications 5 à 8, **caractérisé en ce qu'**il comprend la détermination dudit second angle ($\alpha$2) d'inclinaison du bord de coupe (17) au moyen de la formule :

$$\alpha = arcsin \left\{ \frac{D2}{2} \left[ \frac{W^2}{4} \left( 1 - \frac{\left( R - \sqrt{R^2 - \frac{W^2}{4}} - \frac{D2}{2} \right)^2}{\frac{D2^2}{4}} \right)^{-1} \right]^{-0.5} \right\}$$

où :

D2 : est le diamètre de la seconde fraise (12) ;
R : est le rayon de courbure du bord de coupe (17) de l'insert (16) ;
W : est la largeur du bord de coupe (17).

fig. 1

fig. 2

EP 3 873 709 B1

W  17
22
21
23
16
R
fig. 6

X2
16
30
16
S
16
α2
16
16
16
16
15
31
β2
12
fig. 4

X1
11
16
30
α1
16
S
16
16
β1
16
16
16
15
31
fig. 3

X3
13
16
16
30
α3
16
S
16
16
β3
16
16
16
16
31
16
15
fig. 5

fig. 7

fig. 8

fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0005906 A1